# EUROPÄISCHE PATENTSCHRIFT

(11) **EP 0 745 450 B1**
(45) Veröffentlichungstag und Bekanntmachung des Hinweises auf die Patenterteilung: **02.10.2002**
(21) Anmeldenummer: 96108305.2
(22) Anmeldetag: 24.05.1996
(51) Int. Cl.: C22F 3/00, F02B 77/02, F16J 1/02, C22F 1/04, B23K 26/12

(54) **Verfahren zum Bearbeiten der Oberflächen von Werkstücken**
Process for machining of workpiece surfaces
Procédé d'usinage des surfaces de pièces

(30) Priorität: 27.05.1995 DE 19519535
(43) Veröffentlichungstag der Anmeldung: 04.12.1996
(73) Patentinhaber: AUDI AG, 85045 Ingolstadt (DE)
(72) Erfinder: Bergmann, Hans-Wilhelm, Prof. Dr., 90542 Eckental-Brand (DE); Lindner, Horst, 85051 Ingolstadt (DE); Kreienkamp, Heinrich, 32361 Preussisch-Oldendorf (DE)

(56) Entgegenhaltungen:
- EP-A- 0 419 999
- EP-A- 0 532 000
- WO-A-89/05707
- DE-C- 4 205 307
- US-A- 4 451 302
- US-A- 5 445 689
- TENTH INTERNATIONAL SYMPOSIUM ON GAS FLOW AND CHEMICAL LASERS, FRIEDRICHSHAFEN, GERMANY, 5-9 SEPT. 1994, Bd. 2502, ISSN 0277-786X, PROCEEDINGS OF THE SPIE - THE INTERNATIONAL SOCIETY FOR OPTICAL ENGINEERING, 1995, SPIE-INT. SOC. OPT. ENG, USA, Seiten 701-705, XP000601143 PRAT C ET AL: "Dynamics of 248 nm-laser produced plasmas above a metallic surface"

## Beschreibung

Die Erfindung betrifft ein Verfahren zum Bearbeiten der Zylinderlaufflächen von Hubkolben-Brennkraftmaschinen aus einer Aluminiumlegierung, gemäß dem Oberbegriff des Patentanspruches 1.

Ein derartiges Verfahren beschreibt die EP 419 999 A1, in der vorgeschlagen wird, die gehonten Zylinderlaufflächen von Brennkraftmaschinen mit einem gepulsten Excimer-Laser zu bearbeiten. Durch die Laserstrahlbehandlung wird eine Mikroglättung und Veredelung der gehonten Oberfläche erreicht. Während das Verfahren an einem Zylinderblock aus Gußeisen näher beschrieben wird, kann gemäß Beschreibungseinleitung auch eine Aluminiumlegierung mit Beschichtung verwendet sein, wobei eine derartige Beschichtung nicht näher definiert ist.

Die an den Zylinderlaufflächen durchgeführte Excimer-Laserbehandlung bewirkt ein Mikroglätten der Oberfläche, beseitigt lose anhaftende Materialpartikel, Verschuppungen und legt die verdeckten Graphitlamellen frei. Obwohl die Honriefen bei dieser Behandlung erhalten bleiben, ist eine leichte Anschmelzung der Oberfläche im Mikrobereich unvermeidlich. Es kommt jedoch nicht zur Ausbildung einer meßbaren Umwandlungshärtung.

Die DE 42 05 307 A1 beschreibt ein Verfahren zum partiellen oberflächennahen Wärmebehandeln von Aluminiumteilen einer Brennkraftmaschine, bei dem bei einer relativ großen Behandlungstiefe definierte Raster mit Laserenergie beaufschlagt werden und wobei Kühlluft auf die Rückseite des Aluminiumteiles zur Erzielung einer schnellen örtlichen Abkühlung geblasen wird. Dabei erfolgt ein oberflächennaher Umschmelzvorgang mit feinkömiger Gefügeausbildung.

Femer betrifft die EP 0 532 000 A1 ein hochfestes Strukturbauteil, welches unter Verwendung AIN-haltigem Metallpulver pulvermetallurgisch hergestellt wird, wobei unter Applizierung von Stickstoffgas unter hohem Druck ultrafeine Partikelgrößen von 40 bis 120 nm erzielt werden.

Schließlich ist es aus der US-A-44 51 302 bekannt, Werkstücke aus einer Aluminiumlegierung mit ggf. Siliciumanteilen und Magnesiumanteilen an deren Oberfläche mittels eines CO₂- oder Nd-Yag-Lasers und ebenfalls unter Stickstoffumgebung impulsförmig zu beaufschlagen und somit durch das Eindiffundieren von Stickstoff im Plasma eine AIN-Oberfläche zu schaffen, die eine deutlich erhöhte Härte im µ-Bereich aufweist.

Ausgehend von dem eingangs genannten Verfahren liegt der vorliegenden Erfindung die Aufgabe zugrunde, die Zylinderlaufflächen von Hubkolben-Brennkraftmaschinen aus einer Aluminiumlegierung bei nur geringem Mehraufwand hinsichtlich ihrer tribologischen Eigenschaften, ihrer Verschleißfestigkeit und Korrosionsbeständigkeit deutlich zu verbessern.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Überraschend hat sich gezeigt, daß bei einer Laufflächenbehandlung im Mikrobereich mit einem gepulsten Laser bei Verwendung einer Stickstoffumgebung (N₂) sich auf der Lauffläche eine mehrere µm starke Aluminiumnitrit (ALN) Oberflächenschicht ausbildet, die nahezu homogen und glattflächig vorliegt, so daß hervorragende tribologische Eigenschaften und eine hohe Verschleißbeständigkeit und Korrosionsbeständigkeit erreicht werden. Insbesondere bei der in den Patentansprüchen angegebenen Mehrfachbelichtung der Oberfläche mit dem Laser, insbesondere einem Nd-Yag oder einem Excimer-Laser, wird ein progressives Anwachsen dieser Oberflächenschicht bis zu einer Stärke von 20 - 30 µm erzielt, wodurch eine Verwendung des Verfahrens selbst bei hochbelasteten Zylinderlaufflächen für Hubkolben-Brennkraftmaschinen gut geeignet ist. Ein besonderer Vorteil des erfindungsgemäßen Verfahrens liegt auch darin, daß die durch die Diffusion des Stickstoffes bewirkte Oberflächenschicht geringe Reibwerte aufweist und keiner weiteren Nachbearbeitung mehr bedarf, so daß die Schicht hinsichtlich ihrer Stärke unverändert erhalten bleibt. Durch die angegebene Einstellung der Laserparameter wird dabei sowohl die Topographie der Oberfläche als auch deren chemische Zusammensetzung günstig beeinflußt.

Besonders gute Ergebnisse hinsichtlich auch der Schichtstärke konnten dadurch erzielt werden, daß die Stickstoffumgebung unter einem erhöhten Druck steht, wodurch offensichtlich das Diffusionsverhalten des Stickstoffes verstärkt und die Homogenität der ALN-Schicht erhöht wird. Als fertigungstechnisch gut beherrschbar hat sich dabei ein Druck von bis zu 3 bar herausgestellt.

Femer kann dem Stickstoff (N₂) in geringeren Mengen ein dissozierendes Gas, insbesondere Wasserstoff, beigemengt werden, um die Aluminiumnitrit-Ausbildung zu verstärken.

Als Ausgangswerkstoff des Zylinderblockes einer Brennkraftmaschine wird bevorzugt eine Aluminium-Silizium-Legierung mit einem Siliziumanteil < 13 %, insbesondere um 10 %, vorgeschlagen. Ein derartiger Werkstoff ist bei der Fertigung des Zylinderblockes gut zerspanbar, weist ausreichende Festigkeitseigenschaften auf und ist nach dessen Fertigbearbeitung der Zylinderlaufflächen durch die Laserbehandlung in der Stickstoffumgebung ohne jede weitere Nachbehandlung einsatzbereit, wobei die Zylinderlaufflächen hervorragende tribologische Eigenschaften und eine hohe Verschleiß- und Korrosionsbeständigkeit aufweisen.

Abweichend von dem bisher beschriebenen Verfahren könnte die Laserbehandlung unter Stickstoffumgebung durch einmalige Belichtung der Oberfläche zur Bildung von Aluminiumnitrit-Keimen verwendet werden, die nachträglich ein wirkungsvolles Plasmanitrieren ermöglichen, wobei Schichtstärken bis zu 60 µm und höher erzielbar wären.

### Ausführungsbeispiel:

Ein Zylinderblock aus AlSi10 (als Hauptlegierungsbestandteile) einer Hubkolben-Brennkraftmaschine wurde zunächst mechanisch bearbeitet, wobei die Zylinderlaufflächen entsprechend gebohrt und schließlich auf Fertigmaß gehont wurden. Ggf. könnte anstelle des Fertighonens auch ein Feinbohren durchgeführt werden.

Anschließend wurde der Zylinderblock unter Stickstoffumgebung N₂ mit einem Druck von 3 bar einer Excimerlaser-Bearbeitung (XeCl-Excimerlaser, Wellenlänge 308 nm) unterzogen, bei der die Zylinderlaufflächen mit einer Engergiedichte E von 30 mJ/mm² 64 mal mit einer Pulsdauer von 100 ns belichtet wurden. Dabei bildete sich auf den Zylinderlaufflächen eine Aluminiumnitritschicht ALN mit einer Diffusionstiefe von 25 µm aus, z. B. entsprechend anliegender Abbildung einer TEM-Aufnahme in 100.000 facher Vergrößerung.

Die hellen Punkte in der Größenordnung < 500 nm, überwiegend < 200 nm, sind dabei die im Material ausgebildeten ALN-Teilchen (hexagonal) und gelegentliche ALO-Teilchen.

Hinsichtlich der Belichtungshäufigkeit hat sich überraschend gezeigt, daß die Diffusionstiefe der ALN-Schicht zunächst gering ist, ab einer Belichtungszahl aber von ca. 16 progressiv zunimmt bis zu einer Belichtungszahl von ca. 64. Danach stagniert die Stickstoffeinlagerung. Zum Glätten der Lauffläche werden die letzten Belichtungen bei um 50 bis 75 % verminderter Energiedichte E appliziert.

Die erzielte ALN-Schicht hat hervorragende tribologische Eigenschaften mit günstigen Reibwerten und geringer Rauhigkeit. Die ALN-Schicht ist sehr homogen und verschleißfest sowie korrosionsbeständig und damit selbst für hoch beanspruchte Zylinderlaufflächen von Brennkraftmaschinen gut geeignet. Entsprechende Verschleißversuche und -messungen bestätigten die Einsatzfähigkeit einer derartigen ALN-Schicht.

Aufgrund der nach der Bearbeitung mit dem Excimerlaser erzielten hohen Oberflächengüte bei unveränderter Maßhaltigkeit und geometrischer Genauigkeit der Zylinderlaufflächen ist keine weitere Nachbearbeitung erforderlich.

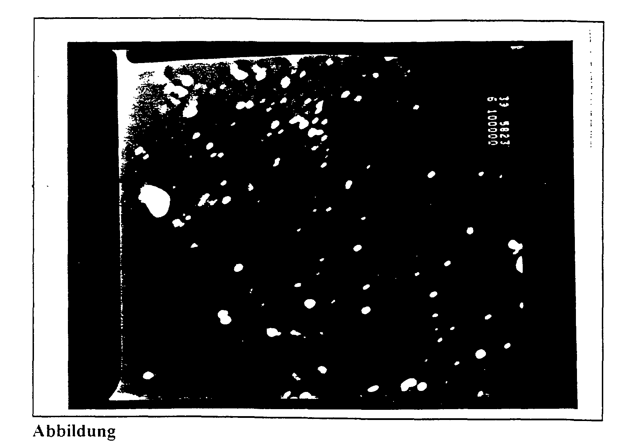

## Patentansprüche

1. Verfahren zum Bearbeiten der Zylinderlaufflächen von Hubkolben-Brennkraftmaschinen aus einer Aluminlumlegierung, mittels eines Lasers, dessen Energie impulsförmig unter Beeinflussung der Oberflächenstruktur im Mikrobereich indiziert wird, **dadurch gekennzeichnet, daß** die Bearbeitung unter überwiegender Stickstoffumgebung durchgeführt wird.

2. Verfahren nach Anspruch 1, **dadurch gekennzeichnet, daß** die Stickstoffumgebung unter einem erhöhten Druck steht, insbesondere von bis zu 3 bar.

3. Verfahren nach Anspruch 1 oder 2, **dadurch gekennzeichnet, daß** als Laser ein Excimerlaser oder ein Nd-Yag-Laser verwendet wird.

4. Verfahren nach den Ansprüchen 1 - 3, **dadurch gekennzeichnet, daß** die zu bearbeitende Oberfläche mehrfach belichtet wird.

5. Verfahren nach Anspruch 4, **dadurch gekennzeichnet, daß** die zu bearbeitende Oberfläche ≥ 30 mal, insbesondere ca. 64 mal belichtet wird.

6. Verfahren nach einem oder mehreren der vorhergehenden Ansprüche, **dadurch gekennzeichnet, daß** die Energiedichte E 10 bis 60 mJ/mm², insbesondere 30 mJ/mm² beträgt.

7. Verfahren nach Anspruch 6, **dadurch gekennzeichnet, daß** die Energiedichte E bei den letzten Belichtungen um 50 - 70 % verringert wird.

8. Verfahren nach einem oder mehreren der Ansprüche 1 - 7, **dadurch gekennzeichnet, daß** dem Stickstoff (N₂) geringere Mengen Wasserstoff beigemengt sind.

9. Verfahren nach einem oder mehreren der Ansprüche 1- 8, **dadurch gekennzeichnet, daß** als Ausgangswerkstoff eine Aluminium-Silizium-Legierung mit einem Si-Anteil < 13 %, insbesondere um 10 %, verwendet wird.

10. Verfahren nach einem oder mehreren der Ansprüche 1 - 9, **dadurch gekennzeichnet, daß** nach einer einmaligen Belichtung der Oberfläche ein Plasmanitrieren durchgeführt wird.

11. Verfahren nach einem oder mehreren der vorhergehenden Ansprüche, **dadurch gekennzeichnet, daß** die Laserbelichtung als letzte, abschließende Oberflächenbearbeitung erfolgt.

## Claims

1. Process for machining the cylinder faces of aluminium alloy reciprocating internal combustion engines by means of a laser whose pulsed energy is registered in the micro range with modification of the surface structure, **characterized in that** the machining is performed in an atmosphere consisting predominantly of nitrogen.

2. Process according to Claim 1, **characterized in that** the nitrogen atmosphere is at elevated pressure, in particular a pressure of up to 3 bar.

3. Process according to Claim 1 or Claim 2, **characterized in that** an excimer laser or Nd-YAG laser is used as laser.

4. Process according to Claims 1 - 3, **characterized in that** the surface to be machined is exposed repeatedly.

5. Process according to Claim 4, **characterized in that** the surface to be machined is exposed at least 30 times, in particular approx. 64 times.

6. Process according to one or more of the preceding claims, **characterized in that** the energy density E is 10 to 60 mJ/mm², in particular 30 mJ/mm².

7. Process according to Claim 6, **characterized in that** the energy density E is reduced by 50 - 70 % for the last exposures.

8. Process according to one or more of Claims 1 - 7, **characterized in that** the nitrogen (N₂) is mixed with smaller quantities of hydrogen.

9. Process according to one or more of Claims 1 - 8, **characterized in that** an aluminium-silicon alloy with a silicon content of less than 13 %, in particular about 10 %, is used as initial material.

10. Process according to one or more of Claims 1 - 9, **characterized in that** after a single exposure of the surface, a plasma-nitriding is performed.

11. Process according to one or more of the preceding claims, **characterized in that** the laser exposure is the ultimate and concluding surface treatment.

## Revendications

1. Procédé d'usinage des surfaces de cylindre soumises à un mouvement, dans des moteurs à combustion à pistons alternatifs en un alliage d'aluminium, au moyen d'un laser, dont l'énergie est indexée dans la plage micrométrique de façon impulsionnelle, en influant sur la structure de surface, **caractérisé en ce que** l'usinage est conduit sous une ambiance majoritaire d'azote.

2. Procédé selon la revendication 1, **caractérisé en ce que** l'ambiance d'azote se présente sous une pression augmentée, en particulier allant jusqu'à 3 bars.

3. Procédé selon la revendication 1 ou 2, **caractérisé en ce qu'**on utilise comme laser un laser excimère ou bien un laser Nd-Yag.

4. Procédé selon les revendications 1 à 3, **caractérisé en ce que** la surface à usiner est illuminée à plusieurs reprises.

5. Procédé selon, la revendication 4, **caractérisé en ce que** la surface à usiner est illuminée ≥ 30 fois, en particulier environ 64 fois.

6. Procédé selon l'une ou plusieurs des revendications précédentes, **caractérisé en ce que** la densité d'énergie E est de 10 à 60 mJ/mm², en particulier de 30 mJ/mm².

7. Procédé selon la revendication 8, **caractérisé en ce que** la densité d'énergie E est diminuée de 50 à, 70 % lors des dernières illuminations.

8. Procédé selon les revendications 1 à 7, **caractérisé en ce que** l'on ajoute en mélange de faibles quantités d'hydrogène à l'azote (N₂).

9. Procédé selon une ou plusieurs des revendications 1 à 8, **caractérisée en ce que** l'on utilise comme matériau initial un alliage aluminium-silicium avec une proportion en Si < 13 %, en particulier de 10 %.

10. Procédé selon une ou plusieurs des revendications 1 à 9, **caractérisé en ce que** l'on procède à une nitruration au plasma, après avoir effectué une première illumination de la surface.

11. Procédé selon l'une ou plusieurs des revendications précédentes, **caractérisé en ce que** l'illumination par laser s'effectue en tant que dernier usinage de surface, de conclusion.
